# EUROPÄISCHE PATENTSCHRIFT

(11) **EP 0 320 774 B1**
(45) Veröffentlichungstag und Bekanntmachung des Hinweises auf die Patenterteilung: **17.08.1994**
(21) Anmeldenummer: 88120444.0
(22) Anmeldetag: 07.12.1988
(51) Int. Cl.: C09B 63/00, C09B 67/48, C09D 7/12, D21H 21/28, C08K 5/23, C09B 67/08

(54) **Monoazopigment, Verfahren zu seiner Herstellung und seine Verwendung**
Monoazo pigment, its preparation process and its use
Pigment monoazoique, son procédé de fabrication et son utilisation

(30) Priorität: 17.12.1987 DE 3742815
(43) Veröffentlichungstag der Anmeldung: 21.06.1989
(73) Patentinhaber: HOECHST AKTIENGESELLSCHAFT, 65926 Frankfurt am Main (DE)
(72) Erfinder: Frölich, Heinrich, Dr., D-6272 Niedernhausen (DE)

(56) Entgegenhaltungen:
- EP-A- 0 091 882
- EP-A- 0 097 913
- FR-A- 2 169 115
- US-A- 2 573 851

## Beschreibung

Die Erfindung betrifft eine neue kristallographische Modifikation (β-Modifikation) des Pigments der Formel (I)

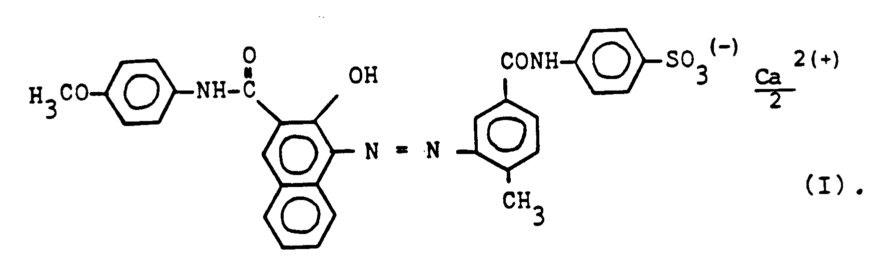

Das aus Beispiel 5 der deutschen Auslegeschrift Nr. 2 203 094 (US-A-3,997,523) bekannte Pigment der Formel (I) liegt in der α-Modifikation vor. Die nunmehr gefundene β-Modifikation besitzt zum Teil andere wertvolle anwendungstechnische Eigenschaften und läßt sich anhand des Röntgenbeugungsspektrums von der α-Modifikation unterscheiden.

Gegenstand der Erfindung ist somit ein Pigment der genannten Formel (I), gekennzeichnet durch ein Röntgenbeugungsspektrum mittels Cu-K_{α}-Strahlung, das bei folgenden Beugungswinkeln 2 ϑ (Genauigkeit ± 0,2°) Reflexe aufweist:
Bei 21,95° ein Maximum hoher Intensität, bei 5,40°, 7,30°, 10,85°, 14,50° und 27,60° Maxima mittlerer Intensität und bei 10,05°, 12,80°, 16,40°, 17,95°, 24,65° und 25,80° Maxima geringer Intensität.

Die Einteilung der Röntgenreflexe im Maxima hoher, mittlerer und geringer Intensität bezieht sich auf die Messung der Intensitäten von Röntgenpulveraufnahmen des Pigments mit einem Szintillationszähler als Detektor (Schrittbreite: 0,1°; Schrittgeschwindigkeit: 0,7°/min), wobei die Höhe der gemessenen Zählrate bei dem jeweiligen Maximum relativ zu dem höchsten Maximum bewertet ist.

Gegenstand der Erfindung ist auch ein Verfahren zur Herstellung der erfindungsgemäßen β-Modifikation des Pigments der Formel (I), dadurch gekennzeichnet, daß diazotierte N-(3-Amino-4-methylbenzoyl)-sulfanilsäure in wäßrigem Medium, gegebenenfalls in Gegenwart eines organischen Lösungsmittels, auf alkalisch gelöstes 2-Hydroxy-3-naphthoesäure-N-(4-methoxyphenyl)-amid gekuppelt und das Kupplungsprodukt mittels Zusatz von Calciumsalzen verlackt wird, wobei spätestens vor der Verlackung mindestens ein kationaktives Tensid zugesetzt wird, sowie eine wäßrige Suspension des verlackten Azofarbstoffs auf eine Tempeatur von 130 bis 180°C erhitzt wird.

Der Zusatz des kationaktiven Tensids kann vor der Azokupplung zu der Diazokomponente, zu der Kupplungskomponente oder zu beiden oder bei der Azokupplung zur Reaktionsmischung oder nach der Azokupplung erfolgen. Vorzugsweise wird bereits die Azokupplung in Gegenwart eines kationaktiven Tensids durchgeführt und die erhaltene Suspension oder Lösung des Kupplungsprodukts direkt für die Verlackung verwendet.

Als kationaktive Tenside sind Tenside geeignet, in denen die kationische Struktur bereits im Molekül vorgegeben ist, beispielsweise Tenside vom Typ der quarternären Ammonium- und Phosphoniumsalze, tertiären Sulfoniumsalzen, N,N-Dialkylimidazoline und N-Alkylpyridiniumsalze, oder solche Tenside, bei denen sich die kationische Struktur erst in wäßriger Lösung durch Protonierung bildet, beispielsweise Tenside vom Typ der primären, sekundären und tertiären Amine, die auch mehrere kationaktive Zentren enthalten können. Vorzugsweise eignen sich kationaktive Tenside mit mindestens einem langkettigen Alkylrest mit 8 bis 24 C-Atomen, insbesondere 10 bis 18 C-Atomen. Beispiele für geeignete kationaktive Tenside sind Alkyltrimethylammoniumsalze, wie Decyl-, Lauryl-, Myristyl-, Cetyl- oder Stearyltrimethylammoniumchlorid oder Gemische davon, weiterhin Alkyldimethylbenzylammoniumsalze, wie Decyl-, Lauryl-, Myristyl-, Cetyl- oder Stearyldimethylbenzylammoniumchlorid oder Gemische davon. Geeignet sind auch Fettamine mit 8 bis 18 C-Atomen. Bevorzugtes kationaktives Tensid ist Cetyltrimethylammoniumchlorid. Die Menge an kationaktivem Tensid beträgt in der Regel etwa 1 bis 20 Gew.-% Tensid, vorzugsweise 1,5 bis 5 Gew.-% Tensid, bezogen auf das Gewicht des Azokupplungsprodukts in der Säureform. In den meisten Fällen ist es günstig, mit so wenig wie möglich kationaktivem Tensid auszukommen, damit der Restgehalt dieses Tensids im Pigment gering ist und ein negativer Einfluß auf die Echtheitseigenschaften des Pigmentes weitgehend vermieden wird. Die minimale und die optimale Menge an kationaktivem Tensid hängt von der Struktur des jeweiligen Tensids ab und läßt sich in wenigen Vorversuchen ermitteln.

Die Azokupplung kann in an sich üblicher Weise durchgeführt werden, wobei der Zusatz weiterer Tenside, insbesondere nichtionogener Tenside, zur Diazokomponente oder Kupplungskomponente oder zu beiden vorteilhaft sein kann. Die Kupplungskomponente wird in alkalisch gelöster Form eingesetzt, vorzugsweise gelöst in der Lauge eines Alkalimetallhydroxyds, insbesondere in Natronlauge.

Die anschließende Verlackung kann ebenfalls nach üblichen Methoden erfolgen. Beispielsweise wird die erhaltene alkalische Suspension oder Lösung des Kupplungsprodukts vor der Verlackung neutral gestellt, wobei gegebenenfalls zeitweise im Sauren gerührt wird. Das nunmehr in Form seines suspendierten oder gelösten Alkalimetallsalzes vorliegende Kupplungsprodukt wird durch Zugabe eines festen oder gelösten Calciumsalzes verlackt. Die Verlackung erfolgt in der Regel unter Zugabe von festem oder gelöstem Calciumchlorid zur Suspension des Alkalimetallsalzes des Azofarbstoffs bei einer Temperatur bis zur Siedetemperatur der Suspension.

Um den verlackten Azofarbstoff in einer besonders kornweichen Form zu erhalten, kann es vorteilhaft sein, die Verlackung zusätzlich in Gegenwart von Dispergiermitteln, beispielsweise anionaktiven oder nichtionogenen Dispergiermitteln, durchzuführen. Beispielsweise hat sich die Verwendung geringer Mengen des Kondensationsprodukts aus Ölsäurechlorid und Methylaminoessigsäure oder 2-Methylaminoäthansulfonsäure sowie partielle Fettsäureester des Glycerins bewährt.

Nach der Verlackung wird das Pigment zunächst in einer Kristallform erhalten, die sich im Röntgenbeugungsspektrum im wesentlichen nicht von der bekannten α-Modifikation des Pigments unterscheidet. Zur Umwandlung in die erfindungsgemäße ß-Modifikation wird die erhaltene Pigmentsuspension oder die nach Zwischenisolierung des Pigments und Suspendieren des Pigmentpreßkuchens in Wasser erhaltene Pigmentsuspension im geschlossenen Gefäß auf 130 bis 180°C, vorzugsweise 135 bis 160°C, einige Zeit erhitzt. Die Umwandlung in die ß-Modifikation läßt sich gut an dem obengenannten charakteristischen Röntgenbeugungsspektrum der β-Modifikation im Vergleich zur α-Modifikation nachweisen. Die α-Modifikation wird demgegenüber charakterisiert durch ein Röntgenbeugungsspektrum mittels Cu-K_{α}-Strahlung, das bei folgenden Beugungswinkeln 2 ϑ (Genauigkeit ± 0,2°) Reflexe aufweist:
Bei 6,85°, 10,80°, 17,05°, 20,10°, 21,40°, 27,50° und 27,70° Maxima hoher Intensität, bei 9,15°, 11,45°, 21,95° und 22,75° Maxima mittlerer Intensität und bei 12,85°, 14,24°, 15,35°, 23,60°, 24,35°, 25,15°, 26,05°, 29,30°, 29,75° und 31,95° Maxima geringer Intensität.
Die Messung der Reflexe und ihrer Intensitäten erfolgen dabei wie bei der β-Modifikation.

Nach der Umwandlung in die β-Modifikation kann das wäßrig suspendierte Pigment analog zu üblichen Methoden weiterverarbeitet werden. In der Regel wird das Pigment zunächst als wäßriger Preßkuchen isoliert, mit Wasser gewaschen, getrocknet und gemahlen. Das erhaltene Pigmentpulver wird dann zum Pigmentieren von Anwendungsmedien verwendet. Die Pigmentsuspension kann eventuell auch sprühgetrocknet werden oder direkt zu Pigmentpräparationen verarbeitet werden.

Obwohl die β-Modifikation des Pigments nach dem erfindungsgemäßen Verfahren im wesentlichen erst bei der thermischen Behandlung bei 130°C oder mehr als 130°C gebildet wird, ist auch die spezielle Form des verlackten Azofarbstoffs, die bei der erfindungsgemäßen Herstellung in Gegenwart des kationaktiven Tensids entsteht, ein Grund für die Bildung der β-Modifikation. Im Gegensatz zu dem erfindungsgemäß nach Azokupplung und Verlackung erhaltenen Produkt erhält man nämlich nach dem Verfahren von Beispiel 5 der deutschen Auslegeschrift Nr. 22 03 094 (US-A-3,997,523) das Pigment in einer Form, die auch mit einer Hitzebehandlung bei 130° bis 180°C analog dem erfindungsgemäßen Verfahren nicht in die β-Modifikation umgewandelt wird, sondern das Kristallgitter der α-Modifikation beibehält.

Die neue β-Modifikation des verlackten Azofarbstoffs der Formel (I) zeigt einen wesentlich gelbstichigeren roten Farbton als die bekannte α-Modifikation. Die Farbtonänderung entspricht in HD-(High Density)-Polyäthylen einer Bunttonwinkel-Verschiebung von ca. 10 bis 11° nach DIN 6174 (CIELAB-Formel) bei einer Standardfarbtiefe ST 1/3 nach DIN 53235.

Das Pigment zeichnet sich durch einen brillanten gelbstichig-roten Farbton, gute Farbstärke, gute Dispergierbarkeit und hervorragende Echtheitseigenschaften, wie Migrationsechtheit und Hitzebeständigkeit aus. Es läßt sich leicht in Polyolefine, beispielsweise Polyethylen,einarbeiten und ergibt dabei eine Pigmentierung mit guter Farbstärke, ausgezeichneter Farbtonreinheit und gutem Verzugsverhalten. Im Vollton pigmentiertes Polyvinylchlorid zeigt bei Lichteinwirkung gute Ergebnisse hinsichtlich Farbtonbeständigkeit und Stabilität gegen Nachdunkeln.

Gegenstand der Erfindung ist deshalb auch die Verwendung der erfindungsgemäßen ß-Modifikation des Pigments der Formel (I) zum Pigmentieren von natürlichen und synthetischen Materialien. Das erfindungsgemäße Pigment eignet sich beispielsweise zum Pigmentieren von Druckfarben, Lacken, thermoplastischen und duroplastischen Massen, wie natürlichen Harzen und Kunstharzen, beispielsweise Polymerisationsharzen, Kondensationsharzen, Silikonharzen oder Caseinharzen, Polystyrol und dessen Mischpolymerisaten, Polyolefinen, insbesondere Polyäthylen oder Polypropylen, Polyacryl-Verbindungen, Polyvinyl-Verbindungen, beispielsweise Polyvinylchlorid oder Polyvinylacetat, Polyestern und Gummi, sowie Kunstseiden aus Viskose oder Celluloseäthern, Celluloseestern, Polyamiden, Polyurethanen, Polyglykolterephthalaten und Polyacrylnitril. Es eignet sich auch zum Pigmentdruck und zum Pigmentieren von Papier in der Masse. Wegen der hervorragenden Temperaturbeständigkeit des Pigments eignet es sich besonders zum Pigmentieren von Polystyrol, Mischpolymerisaten auf Basis des Polystyrols, Polyolefinen, insbesondere Polyäthylen und Polypropylen, und entsprechenden Mischpolymerisaten sowie von Polyvinylchlorid.

In den folgenden Beispielen beziehen sich Teile und Prozente auf das Gewicht, sofern nichts anderes angegeben ist. Volumenteile verhalten sich zu Gewichtsteilen wie Liter zu Kilogramm.

### Beispiele

1) 196,8 Teile N-(3-Amino-4-methylbenzoyl)-sulfanilsäure-Natriumsalz werden in Gegenwart von 3 Teilen eines Alkylpolyglykoläthers unter Rühren in 1000 Teile Wasser eingetragen und dann mit 257,8 Teilen 31 %iger wäßriger Saaaalzsäure versetzt. Nach dem Verrühren werden bei 20 bis 25°C innerhalb von 30 Minuten 110 Teile 38 %iger wäßriger Natriumnitritlösung zugegeben und noch weitere 1 1/2 Stunden bei Raumtemperatur gerührt. Nach Zerstörung des Überschusses an salpetriger Säure durch Zugabe von Amidosulfonsäure werden 37,3 Teile einer 29 %igen wäßrigen Lösung von Cetyltrimethylammoniumchlorid (Alkylrest entspricht zu mindestens 90 % aus C₁₆-Alkyl) zugegeben. Die erhaltene Suspension des Diazoniumsalzes wird anschließend innerhalb von 45 Minuten bei einer Temperatur von 0 bis 20°C unter Rühren zu einer geklärten Lösung der Kupplungskomponente gegeben, die zuvor aus 181,1 Teilen 2-Hydroxy-3-naphthoesäure-N-(4-methoxyphenyl)-amid, 800 Teilen Wasser, 63,6 Teilen kalzinierter Soda und 146,7 Teilen 33 %iger Natronlauge unter Erwärmen hergestellt worden ist. Nach beendeter Kupplung wird durch vorsichtige Zugabe von 31 %iger Salzsäure auf pH 5 gestellt, 10 Minuten nachgerührt und dann der pH-Wert durch Zugabe von verdünnter Natronlauge wieder auf pH 7 erhöht. Darauf fügt man eine Lösung von 6,12 Teilen des Natriumsalzes des Kondensationsprodukts aus Ölsäurechlorid und Methylaminoessigsäure hinzu und erhitzt die Suspension durch Einleiten von Wasserdampf. Bei Erreichen von 85°C werden 24 Teile eines partiellen Fettsäureesters des Glycerins zugesetzt. Nach Erreichen von 90°C werden zur Verlackung 168 Teile handelsübliches 80 %iges Calciumchlorid zugesetzt und die Temperatur danach noch 15 Minuten bei 90°C gehalten.
   Zur Umwandlung in die β-Modifikation wird die erhaltene Pigmentsuspension in einem geeigneten geschlossenen Gefäß innerhalb von 45 Minuten unter Rühren auf 155°C erhitzt und 3 Stunden bei 155°C gehalten. Das Pigment wird nach Abkühlung und Druckausgleich bei 70°C abgesaugt, gewaschen und getrocknet. Das erhaltene Pigment zeigt im Röntgenbeugungsspektrum mittels Cu-K_{α}-Strahlung die für die β-Modifikation des Pigments charakteristischen Reflexe. Das gelbstichig-rote Pigment hat einen brillanten Farbton, der gelbstichiger ist als der Farbton des Pigments in der α-Modifikation, wie sie nach Beispiel 5 der DE-AS 22 03 094 erhalten wird.
2) Man verfährt wie in Beispiel 1 bis einschließlich der Verlackung durch Zugabe von Calciumchlorid. Die Suspension des verlackten Kupplungsprodukts wird nach der Zugabe des Calciumchlorids noch 1 Stunde bei 90°C erhitzt, anschließend das verlackte Kupplungsprodukt abgesaugt und mit Wasser gewaschen. 386 Teile des erhaltenen Preßkuchens (ca. 1/4 des gesamten Preßkuchens) werden in 1114 Teilen Wasser verrührt, zusätzlich mit 4,5 Teilen 80 %igem Calciumchlorid versetzt und in einem geschlossenen Gefäß auf 145°C erhitzt. Nach 2 Stunden bei 145°C wird auf 70°C abgekühlt und das Pigment abgesaugt, mit Wasser gewaschen und getrocknet. Die Eigenschaften des erhaltenen Pigments entsprechen den Eigenschaften der β-Modifikation, wie sie nach Beispiel 1 erhalten wurde.
3) Man verfährt analog Beispiel 2, verwendet jedoch anstelle von Cetyltrimethylammoniumchlorid ein Alkyltrimethylammoniumchlorid mit einer Alkylketten-Verteilung von etwa 70 % C₁₂, 25 % C₁₄ und 5 % C₁₆ und erhitzt den wie in Beispiel 2 isolierten und wieder in Wasser suspendierten Preßkuchen für 2 Stunden bei 160°C. Man erhält wiederum die β-Modifikation des Pigments mit den beschriebenen Eigenschaften.
4) Man verfährt analog Beispiel 3, verwendet jedoch anstelle des Alkyltrimethylammoniumchlorids ein Alkyldimethylbenzylammoniumchlorid mit einer Alkylketten-Verteilung von ca. 2 % C₁₀, 57 % C₁₂, 23 % C₁₄, 11 % C₁₆ und 7 % C₁₈. Man erhält die β-Modifikation des Pigments mit den in Beispiel 1 beschriebenen Eigenschaften.
5) Man verfährt analog Beispiel 1, verwendet jedoch anstelle von 37,3 Teilen einer 29 %igen Lösung von Cetyltrimethylammoniumchlorid 53,8 Teile einer 29 %igen Lösung von Cetyltrimethylammoniumchlorid. Das resultierende Pigment liegt in der β-Modifikation vor und hat vergleichbare Eigenschaften wie das Pigment aus Beispiel 1.
6) Vergleichsbeispiel: Zur Überprüfung, ob die α-Modifikation des Pigments der Formel (I), wie sie entsprechend der DE-AS 22 03 094 (US-A-3,997,523) erhalten wird, sich in die erfindungsgemäße ß-Modifikation umwandeln läßt, wird wie folgt verfahren:
   65,6 Teile N-(3-Amino-4-methylbenzoyl)-sulfanilsäurenatriumsalz werden entsprechend Beispiel 5 der deutschen Auslegeschrift 2 203 094 diazotiert und in Gegenwart des dort angegebenen nichtionogenen Hilfsmittels, dem Kondensationsprodukt aus 1 Mol Oleylalkohol und 30 Mol Äthylenoxyd, mit 2-Hydroxy-3-naphthoesäure-N-(4-methoxyphenyl)-amid gekuppelt. Es wird dann bis einschließlich der Zugabe der Calciumchlorid-Lösung verfahren, wie es in dem Beispiel 5 der DE-AS 22 03 094 beschrieben ist. Nach der Zugabe der Calciumchlorid-Lösung wird noch 10 Minuten bei 90°C gehalten und die Pigmentsuspension anschließend in einem geschlossenen Gefäß unter Rühren auf 155°C erhitzt. Nach 3 Stunden bei 155°C wird auf 70°C abgekühlt und das Pigment abgesaugt, mit Wasser gewaschen und getrocknet. Das erhaltene Pigment zeigt im Röntgenbeugungsspektrum die für die α-Modifikation charakteristischen Reflexe. Es ist demnach keine Umwandlung in die β-Modifikation eingetreten. Durch das Erhitzen auf 155°C, was im Vergleich zum Verfahren der DE-AS 22 03 094 (US-A-3,997,523) eine höhere Temperatur der Nachbehandlung ist, tritt bei dem Pigment lediglich eine Farbstärkeminderung auf, der Farbton der α-Modifikation ändert sich nicht.
7) Vergleichsbeispiel:
   Man verfährt analog Beispiel 6, erhitzt jedoch die erhaltene Pigmentsuspension anstelle von 3 Stunden bei 155°C für 6 Stunden auf 160°C. Das erhaltene Pigment weist sowohl beim Farbton als auch im Röntgenbeugungsspektrum die Merkmale der α-Modifikation auf. Gegenüber dem Pigment aus Beispiel 5 der DE-AS 22 03 094 (US-A-3,997,523) zeigt das Pigment eine Farbstärkeminderung.
8) Vergleichsbeispiel: Man verfährt analog dem Beispiel 6 bis einschließlich der Verlackung durch Zugabe von Calciumchlorid-Lösung. Nach 10 Minuten bei 90°C wird heiß abgesaugt und mit Wasser gewaschen. Der feuchte Preßkuchen wird analog dem Beispiel 5 der DE-AS 22 03 904 in etwa 2000 Teilen Wasser angeteigt und mit 5 Volumenteilen 2N Natronlauge und einem Gemisch von 50 Volumenteilen 2N Natronlauge und 50 Volumenteilen 2N Calciumchloridlösung versetzt. Nach Erhitzen der Pigmentsuspension auf 80°C werden 4 Teile eines partiellen Fettsäureesters des Glycerins zugegeben und anschließend der Ansatz im geschlossenen Gefäß 2 Stunden bei 145°C gehalten. Nach Isolieren und Mahlen des Pigments analog Beispiel 1 erhält man das Pigment in der bekannten α-Modifikation.
9) Vergleichsbeispiel: Man verfährt analog Beispiel 8, erhitzt jedoch die Pigmentsuspension anstelle von 2 Stunden bei 145°C 2 Stunden bei 160°C. Nach Isolieren und Mahlen des Pigments analog Beispiel 1 wird die bekannte α-Modifikation erhalten. Es findet auch hier keine Umwandlung in die erfindungsgemäße β-Modifikation statt.

## Patentansprüche (Patentansprüche für folgende(n) Vertragsstaat(en): CH, DE, FR, GB, IT, LI)

1. Pigment der Formel (I) 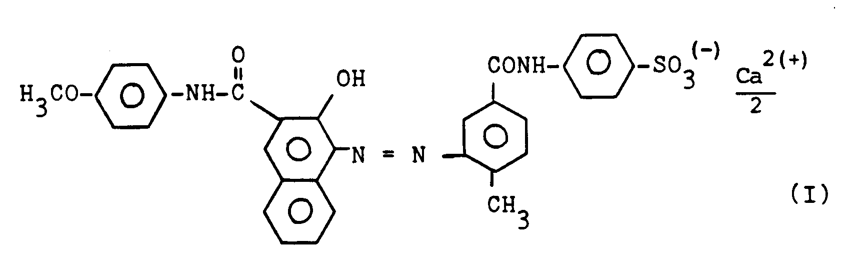 dadurch gekennzeichnet, daß es in einer Modifikation (β-Modifikation) vorliegt, die im Röntgenbeugungsspektrum mittels Cu-K_{α}-Strahlung bei folgenden Beugungswinkeln 2 ϑ (Genauigkeit ± 0,2°) Reflexe aufweist:
Bei 21,95° ein Maximum hoher Intensität, bei 5,40°, 7,30°, 10,85°, 14,50° und 27,60° Maxima mittlerer Intensität und bei 10,05°, 12,80°, 16,40°, 17,95°, 24,65° und 25,80° Maxima geringer Intensität.

2. Verfahren zur Herstellung der β-Modifikation des Pigments der Formel (I) nach Anspruch 1, dadurch gekennzeichnet, daß diazotierte N-(3-Amino-4-methylbenzoyl)-sulfanilsäure in wäßrigem Medium, gegebenenfalls in Gegenwart eines organischen Lösungsmittels, auf alkalisch gelöstes 2-Hydroxy-3-naphthoesäure-N-(4-methoxyphenyl)-amid gekuppelt und das Kupplungsprodukt mittels Zusatz von Calciumsalzen verlackt wird, wobei spätestens vor der Verlackung mindestens ein kationaktives Tensid zugesetzt wird, sowie eine wäßrige Suspension des verlackten Azofarbstoffs auf eine Temperatur von 130 bis 180°C erhitzt wird.

3. Verfahren nach Anspruch 2, dadurch gekennzeichnet, daß die wäßrige Suspension des verlackten Azofarbstoffs auf eine Tempeatur von 135 bis 160°C erhitzt wird.

4. Verfahren nach Anspruch 2 oder 3, dadurch gekennzeichnet, daß mindestens ein kationaktives Tensid aus der Gruppe, bestehend aus quarternären Ammoniumsalzen, quarternären Phosphoniumsalzen, tertiären Sulfoniumsalzen, N,N-Dialkylimidazolinen, N-Alkylpyridiniumsalzen sowie primären sekundären und tertiären Aminen, zugesetzt wird.

5. Verfahren nach einem oder mehreren der Ansprüche 2 bis 4, dadurch gekennzeichnet,daß das kationaktive Tensid mindestens einen langkettigen Alkylrest mit 8 bis 24 C-Atomen aufweist.

6. Verfahren nach einem oder mehreren der Ansprüche 2 bis 5, dadurch gekennzeichnet, daß das kationaktive Tensid ein Alkyltrimethylammoniumsalz oder ein Alkyldimethylbenzylammoniumsalz ist.

7. Verfahren nach einem oder mehreren der Ansprüche 2 bis 6, dadurch gekennzeichnet, daß die Menge an zugesetztem kationaktivem Tensid 1 bis 20 Gew.-%, bezogen auf das Gewicht des Kupplungsprodukts in der Säureform, beträgt.

8. Verwendung des nach Anspruch 1 definierten Pigments in der β-Modifikation zum Pigmentieren von natürlichen und synthetischen Materialien.

9. Verwendung nach Anspruch 8 zum Pigmentieren von Druckfarben, Lacken, plastischen Massen, Kunstseiden und Papier.

10. Verwendung nach Anspruch 9 zum Pigmentieren von Polystyrol, Mischpolymerisaten auf Basis des Polystyrols, Polyolefinen, Mischpolymerisaten von Polyolefinen und Polyvinylchlorid.

## Patentansprüche (Patentansprüche für folgende(n) Vertragsstaat(en): ES)

1. Verfahren zur Herstellung eines Pigments der Formel (I) 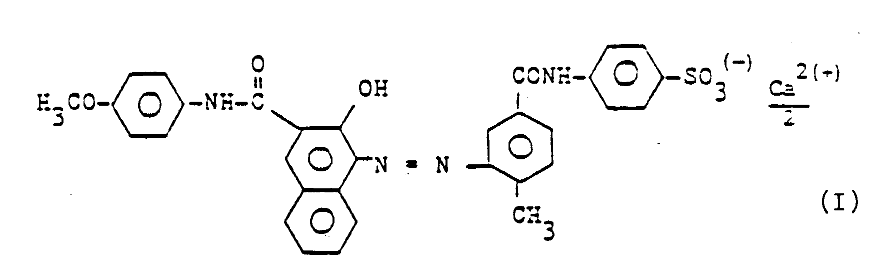 in der β-Modifikation, die im Röntgenbeugungsspektrum (Cu-Kₐ-Strahlung 2 (Genauigkeit ± 0,2°) bei 21,95° ein Maximum hoher Intensität, bei 5,40°, 7,30°, 10,85°, 14,50° und 27,60° Maxima mittlerer Intensität und bei 10,05°, 12,80°, 16,40°, 17,95°, 24,65° und 25,80° Maxima geringer Intensität aufweist, dadurch gekennzeichnet, daß diazotierte N-(3-Amino-4-methylbenzoyl)-sulfanilsäure in wäßrigem Medium, gegebenenfalls in Gegenwart eines organischen Lösungsmittels, auf alkalisch gelöstes 2-Hydroxy-3-naphthoesäure-N-(4-methoxyphenyl)-amid gekuppelt und das Kupplungsprodukt mittels Zusatz von Calciumsalzen verlackt wird, wobei spätestens vor der Verlackung mindestens ein kationaktives Tensid zugesetzt wird, sowie eine wäßrige Suspension des verlackten Azofarbstoffs auf eine Temperatur von 130 bis 180°C erhitzt wird.

2. Verfahren nach Anspruch 1, dadurch gekennzeichnet, daß die wäßrige Suspension des verlackten Azofarbstoffs auf eine Temperatur von 135 bis 160°C erhitzt wird.

3. Verfahren nach Anspruch 1 oder 2, dadurch gekennzeichnet, daß mindestens ein kationaktives Tensid aus der Gruppe, bestehend aus quarternären Ammoniumsalzen, quarternären Phosphoniumsalzen, tertiären Sulfoniumsalzen, N,N-Dialkylimidazolinen, N-Alkylpyridiniumsalzen sowie primären sekundären und tertiären Aminen, zugesetzt wird.

4. Verfahren nach einem oder mehreren der Ansprüche 1 bis 3, dadurch gekennzeichnet,daß das kationaktive Tensid mindestens einen langkettigen Alkylrest mit 8 bis 24 C-Atomen aufweist.

5. Verfahren nach einem oder mehreren der Ansprüche 1 bis 4, dadurch gekennzeichnet, daß das kationaktive Tensid ein Alkyltrimethylammoniumsalz oder ein Alkyldimethylbenzylammoniumsalz ist.

6. Verfahren nach einem oder mehreren der Ansprüche 1 bis 5, dadurch gekennzeichnet, daß die Menge an zugesetztem kationaktivem Tensid 1 bis 20 Gew.-%, bezogen auf das Gewicht des Kupplungsprodukts in der Säureform, beträgt.

7. Verwendung der in Anspruch 1 definierten ß-Modifikation zum Pigmentieren von natürlichen und synthetischen Materialien.

8. Verwendung nach Anspruch 7 zum Pigmentieren von Druckfarben, Lacken, plastischen Massen, Kunstseiden und Papier.

9. Verwendung nach Anspruch 8 zum Pigmentieren von Polystyrol, Mischpolymerisaten auf Basis des Polystyrols, Polyolefinen, Mischpolymerisaten von Polyolefinen und Polyvinylchlorid.

## Claims (Claims for the following Contracting State(s): CH, DE, FR, GB, IT, LI)

1. A pigment of the formula (I) 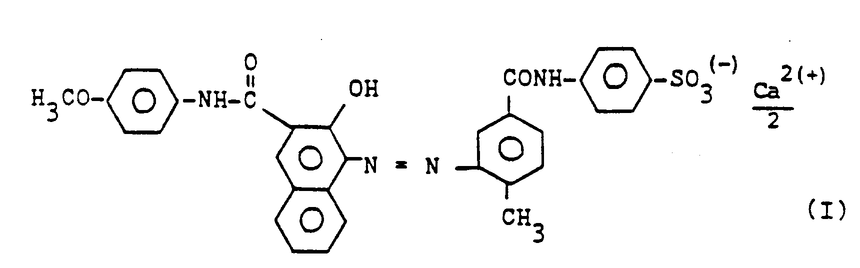 which is present in a modification (β-modification) which in a Cu-K_{α} radiation X-ray diffraction spectrum shows reflections at the following diffraction angles 2ϑ (accuracy ± 0.2°): at 21.95° a maximum of high intensity, at 5.40°, 7.30°, 10.85°, 14.50° and 27.60° maxima of medium intensity and at 10.05°, 12.80°, 16.40°, 17.95°, 24.65° and 25.80° maxima of low intensity.

2. A process for preparing the β-modification of the pigment of the formula (I) as claimed in claim 1, which comprises coupling diazotized N-(3-amino-4-methylbenzoyl)sulfanilic acid in an aqueous medium in the presence or absence of an organic solvent onto alkali-dissolved 2-hydroxy-4'-methoxy-3-naphthanilide and laking the coupling product by adding a calcium salt, at least one cation-active surfactant being added at the latest prior to laking, and heating an aqueous suspension of the laked azo dye at a temperature of 130 to 180°C.

3. The process as claimed in claim 2, wherein the aqueous suspension of the laked azo dye is heated to a temperature of 135 to 160°C.

4. The process as claimed in claim 2 or 3, wherein at least one cation-active surfactant from the group consisting of quaternary ammonium salts, quaternary phosphonium salts, tertiary sulfonium salts, N,N-dialkylimidazolines, N-alkylpyridinium salts and primary, secondary and tertiary amines is added.

5. The process as claimed in one or more of claims 2 to 4, wherein the cation-active surfactant has at least one long-chain alkyl radical of 8 to 24 carbon atoms.

6. The process as claimed in one or more of claims 2 to 5, wherein the cation-active surfactant is an alkyltrimethylammonium salt or an alkyldimethylbenzylammonium salt.

7. The process as claimed in one or more of claims 2 to 6, wherein the amount of cation-active surfactant added is 1 to 20% by weight, based on the weight of the coupling product in the acid form.

8. The use of the pigment defined in claim 1 in the β-modification for pigmenting natural and synthetic materials.

9. A use as claimed in claim 8 for pigmenting printing inks, surface coatings, plastic compositions, rayons and paper.

10. A use as claimed in claim 9 for pigmenting polystyrene, copolymers based on polystyrene, polyolefins, copolymers of polyolefins and polyvinyl chloride.

## Claims (Claims for the following Contracting State(s): ES)

1. A process for preparing a pigment of the formula (I) 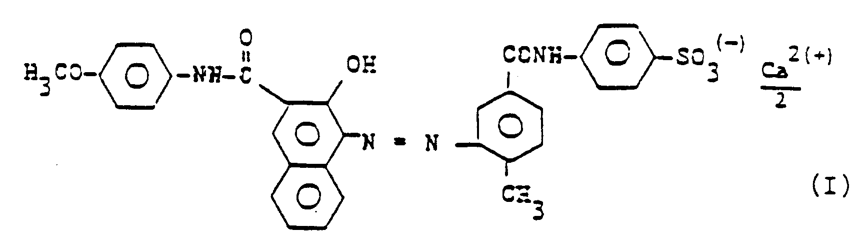 in the β-modification which in an X-ray diffraction spectrum (Cu-K_{α} radiation, 2ϑ) (accuracy ± 0.2°) shows at 21.95° a maximum of high intensity, at 5.40°, 7.30°, 10.85°, 14.50° and 27.60° maxima of medium intensity and at 10.05°, 12.80°, 16.40°, 17.95°, 24.65° and 25.80° maxima of low intensity, which comprises coupling diazotized N-(3-amino-4-methylbenzoyl)sulfanilic acid in an aqueous medium in the presence or absence of an organic solvent onto alkali-dissolved 2-hydroxy-4'-methoxy-3-naphthanilide and laking the coupling product by adding a calcium salt, at least one cation-active surfactant being added at the latest prior to laking, and heating an aqueous suspension of the laked azo dye at a temperature of 130 to 180°C.

2. The process as claimed in claim 1, wherein the aqueous suspension of the laked azo dye is heated to a temperature of 135 to 160°C.

3. The process as claimed in claim 1 or 2, wherein at least one cation-active surfactant from the group consisting of quaternary ammonium salts, quaternary phosphonium salts, tertiary sulfonium salts, N,N-dialkylimidazolines, N-alkylpyridinium salts and primary, secondary and tertiary amines is added.

4. The process as claimed in one or more of claims 1 to 3, wherein the cation-active surfactant has at least one long-chain alkyl radical of 8 to 24 carbon atoms.

5. The process as claimed in one or more of claims 1 to 4, wherein the cation-active surfactant is an alkyltrimethylammonium salt or an alkyldimethylbenzylammonium salt.

6. The process as claimed in one or more of claims 1 to 5, wherein the amount of cation-active surfactant added is 1 to 20% by weight, based on the weight of the coupling product in the acid form.

7. The use of the β-modification defined in claim 1 for pigmenting natural and synthetic materials.

8. A use as claimed in claim 7 for pigmenting printing inks, surface coatings, plastic compositions, rayons and paper.

9. A use as claimed in claim 8 for pigmenting polystyrene, copolymers based on polystyrene, polyolefins, copolymers of polyolefins and polyvinyl chloride.

## Revendications (Revendications pour l'(les) Etat(s) contractant(s) suivant(s): CH, DE, FR, GB, IT, LI)

1. Pigment de formule (I) 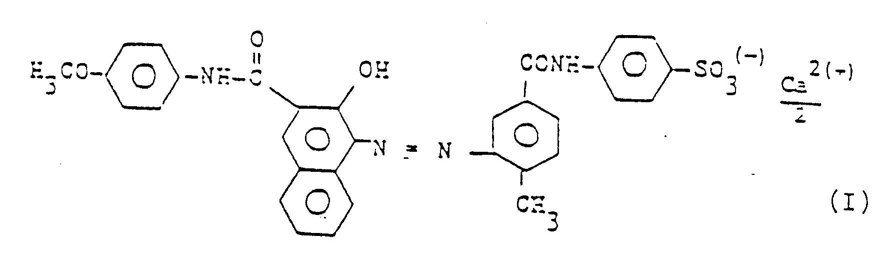 caractérisé en ce qu'il se trouve sous une forme (forme β) qui présente, dans le spectre de diffraction de rayons X avec le rayonnement K_{α} de Cu, des réflexions aux angles de diffraction 2ϑ suivants (précision ± 0,2°):
un maximum de forte intensité à 21,95°, des maximums d'intensité moyenne à 5,40°, 7,30°, 10,85°, 14,50° et 27,60°; et des maximums de faible intensité à 10,05°, 12,80°, 16,40°, 17,95°, 24,65° et 25,80°.

2. Procédé de préparation de la forme β du pigment de formule (I) selon la revendication 1, caractérisé en ce que l'on effectue la copulation de l'acide N-(3-amino-4-méthylbenzoyl)sulfanilique diazoté en milieu aqueux, éventuellement en présence d'un solvant organique, avec le N-(4-méthoxyphényl)amide de l'acide 2-hydroxy-3-naphtoïque en solution basique, et on transforme en pigment le produit de la copulation en ajoutant des sels de calcium, tandis que l'on ajoute au moins un agent tensio-actif cationique au plus tard avant la formation du pigment, et on chauffe une suspension aqueuse du colorant azoïque mis sous forme de pigment à une température de 130 à 180°C.

3. Procédé selon la revendication 2, caractérisé en ce que l'on chauffe la suspension aqueuse du colorant azoïque mis sous forme de pigment à une température de 135 à 160°C.

4. Procédé selon la revendication 2 ou 3, caractérisé en ce que l'on ajoute au moins un agent tensio-actif cationique du groupe constitué par des sels d'ammonium quaternaire, des sels de phosphonium quaternaire, des sels de sulfonium tertiaire, des N,N-dialkylimidazolines, des sels de N-alkylpyridinium et des amines primaires, secondaires et tertiaires.

5. Procédé selon l'une ou plusieurs des revendications 2 à 4, caractérisé en ce que l'agent tensio-actif cationique comporte au moins un reste alkyle à longue chaîne de 8 à 24 atomes de carbone.

6. Procédé selon l'une ou plusieurs des revendications 2 à 5, caractérisé en ce que l'agent tensio-actif cationique est un sel d'alkyltriméthylammonium ou un sel d'alkyldiméthylbenzylammonium.

7. Procédé selon l'une ou plusieurs des revendications 2 à 6, caractérisé en ce que la quantité d'agent tensio-actif cationique ajouté est de 1 à 20 % en masse par rapport à la masse du produit de la copulation sous forme acide.

8. Utilisation du pigment sous forme β défini selon la revendication 1 pour la pigmentation de matières naturelles et synthétiques.

9. Utilisation selon la revendication 8 pour la pigmentation d'encres d'imprimerie, de vernis, de matières plastiques, de soies artificielles et de papier.

10. Utilisation selon la revendication 9 pour la pigmentation de polystyrène, de copolymères à base de polystyrène, de polyoléfines, de copolymères de polyoléfines et de poly(chlorure de vinyle).

## Revendications (Revendications pour l'(les) Etat(s) contractant(s) suivant(s): ES)

1. Procédé de préparation d'un pigment de formule (I) 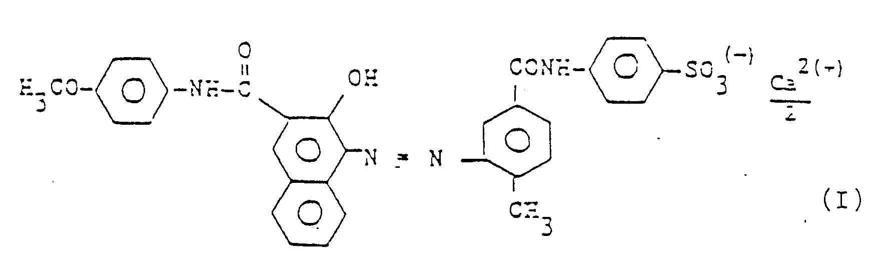 sous forme β qui présente, dans le spectre de diffraction de rayons X (2ϑ du rayonnement K_{α} de Cu, précision ±0,2°), un maximum de forte intensité à 21,95°, des maximums d'intensité moyenne à 5,40°, 7,30°, 10,85°, 14,50° et 27,60°; et des maximums de faible intensité à 10,05°, 12,80°, 16,40°, 17,95°, 24,65° et 25,80°, caractérisé en ce que l'on effectue la copulation de l'acide N-(3-amino-4-méthylbenzoyl)sulfanilique diazoté en milieu aqueux, éventuellement en présence d'un solvant organique, avec le N-(4-méthoxyphényl)amide de l'acide 2-hydroxy-3-naphtoïque en solution basique, et on transforme en pigment le produit de la copulation en ajoutant des sels de calcium, tandis que l'on ajoute au moins un agent tensio-actif cationique au plus tard avant la formation du pigment, et on chauffe une suspension aqueuse du colorant azoïque mis sous forme de pigment à une température de 130 à 180°C.

2. Procédé selon la revendication 1, caractérisé en ce que l'on chauffe la suspension aqueuse du colorant azoïque mis sous forme de pigment à une température de 135 à 160°C.

3. Procédé selon la revendication 1 ou 2, caractérisé en ce que l'on ajoute au moins un agent tensio-actif cationique du groupe constitué par des sels d'ammonium quaternaire, des sels de phosphonium quaternaire, des sels de sulfonium tertiaire, des N,N-dialkylimidazolines, des sels de N-alkylpyridinium et des amines primaires, secondaires et tertiaires.

4. Procédé selon l'une ou plusieurs des revendications 1 à 3, caractérisé en ce que l'agent tensio-actif cationique comporte au moins un reste alkyle à longue chaîne de 8 à 24 atomes de carbone.

5. Procédé selon l'une ou plusieurs des revendications 1 à 4, caractérisé en ce que l'agent tensio-actif cationique est un sel d'alkyltriméthylammonium ou un sel d'alkyldiméthylbenzylammonium.

6. Procédé selon l'une ou plusieurs des revendications 1 à 5, caractérisé en ce que la quantité d'agent tensio-actif cationique ajouté est de 1 à 20 % en masse par rapport à la masse du produit de la copulation sous forme acide.

7. Utilisation de la forme β définie dans la revendication 1 pour la pigmentation de matières naturelles et synthétiques.

8. Utilisation selon la revendication 7 pour la pigmentation d'encres d'imprimerie, de vernis, de matières plastiques, de soies artificielles et de papier.

9. Utilisation selon la revendication 8 pour la pigmentation de polystyrène, de copolymères à base de polystyrène, de polyoléfines, de copolymères de polyoléfines et de poly(chlorure de vinyle).
